(19) Europäisches Patentamt
European Patent Office
Office européen des brevets

(11) **EP 3 172 658 B1**

(12) **EUROPÄISCHE PATENTSCHRIFT**

(45) Veröffentlichungstag und Bekanntmachung des Hinweises auf die Patenterteilung:
**18.03.2020 Patentblatt 2020/12**

(21) Anmeldenummer: **15742180.1**

(22) Anmeldetag: **16.07.2015**

(51) Int Cl.:
**G06F 7/72** *(2006.01)*

(86) Internationale Anmeldenummer:
**PCT/EP2015/001470**

(87) Internationale Veröffentlichungsnummer:
**WO 2016/012087 (28.01.2016 Gazette 2016/04)**

(54) **VERFAHREN ZUM BERECHNEN EINES PUNKTES AUF EINER ELLIPTISCHEN KURVE**

METHOD FOR CALCULATING A POINT ON AN ELLIPTIC CURVE

PROCÉDÉ POUR LE CALCUL D'UN POINT SUR UNE COURBE ELLIPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.07.2014 DE 102014011045**

(43) Veröffentlichungstag der Anmeldung:
**31.05.2017 Patentblatt 2017/22**

(73) Patentinhaber: **Giesecke+Devrient Mobile Security GmbH**
**81677 München (DE)**

(72) Erfinder: **SEYSEN, Martin**
**D-80809 München (DE)**

(56) Entgegenhaltungen:
- **"MACHINE READABLE TRAVEL DOCUMENTS TECHNICAL REPORT Supplemental Access Control for Machine Readable TravelDocuments ISO/IEC JTC1 SC17 WG3/TF5 FOR THE INTERNATIONAL CIVIL AVIATION ORGANIZATION", , 11 November 2010 (2010-11-11), XP055130328, Retrieved from the Internet: URL:http://www.icao.int/security/mrtd/down loads/technical reports/technical report.pdf [retrieved on 2014-07-18]**
- **MENEZES A J ET AL: "HANDBOOK OF APPLIED CRYPTOGRAPHY; Key agreement based on asymmetric techniques", 1997, CRC PRESS, BOCA RATON, FL, USA, XP002667536, ISBN: 978-0-8493-8523-0 pages 515-516,**

**Beschreibung**

Die Erfindung betrifft ein kryptographisches Verfahren mit Berechnen eines Punktes auf einer elliptischen Kurve, gemäß Oberbegriff von Anspruch 1.

Das Dokument [1] TR-PACE-101 beschreibt, als PACE-Protokoll ("Password Authenticated Connection Establishment") ein Passwort-authentisiertes Diffie-Hellman (DH) Schlüsselableitungs-Protokoll, das zwischen einem maschinenlesbaren Reisedokument "MRTD" mit Chip einerseits und einem Inspektionssystem, mit dem Ausweisdaten des Reisedokuments verifiziert werden sollen, andererseits, einen sicheren Kommunikationskanal einrichtet und eine gegenseitige Authentisierung durchführt. Das Protokoll kann insbesondere auch als Elliptische-Kurven-Diffie-Hellman (ECDH) Schlüsselableitungs-Protokoll gestaltet sein. Gemäß [1] TR-PACE-101, Kapitel 2.3.2 3b) führen MRTD und Inspektionssystem dabei gemäß Kapitel 4.3 den Schritt des Mappings durch, bei dem ephemerale Domainparameter abgeleitet werden. Bei der Ausgestaltung von ECDH mit Integrated Mapping wird gemäß Kapitel 4.3.1 ein zufällig gewählter Nonce in eine kryptographische Gruppe abgebildet, hier eine elliptische Kurve EC, und hierdurch ein Punkt auf der elliptischen Kurve berechnet. Kapitel 5.2.1 von [1] TR-PACE-101 gibt ein detailliertes Verfahren zum Berechnen eines Punkts auf einer elliptischen Kurve für das Integrated Mapping bei ECDH in affinen Koordinaten an. Kapitel 5.3.1 gibt ein analoges Verfahren in Jacobi-Koordinaten an. Häufig wird der Punkt in affinen Koordinaten benötigt.

Die Rechenvorschrift Kapitel 5.2.1 von [1] TR-PACE-101 in der Implementierung Kap. 5.2.2 erfordert, dass zwei modulare Exponentiationen durchgeführt werden, nämlich die Schritte 2 und 7. Hierdurch ist die Berechnung des Punktes auf der elliptischen Kurve rechen- und dadurch zeitaufwendig. Wird der Punkt in affinen Koordinaten über den Umweg gemäß Kapitel 5.3.1 in Jacobi-Koordinaten berechnet, sind ebenfalls zwei modulare Exponentiationen erforderlich, nämlich eine erste modulare Exponentiation Kapitel 5.3.1 Schritt 7, und eine zweite für die Umrechung in affine Koordinaten.

Ein bekanntes Verfahren zum Berechnen eines von einem Parameter t abhängigen Punktes auf einer elliptischen Kurve E: $y^2 = g(x)$ (mod $p$) mit $g(x) = x^3 + ax + b$ und $p > 3$ eine Primzahl beruht auf der Skalba-Gleichung. Nach [2] Skalba gibt es rationale Funktionen $u(t)$, $x_1(t)$, $x_2(t)$, $x_3(t)$, die von einer Variablen $t$ und den Kurvenparametern $a$ und $b$ abhängen, so dass gilt

$$u^2(t) = g(x_1(t)) \cdot g(x_2(t)) \cdot g(x_3(t)).$$

Z.B. werden in Theorem 2.3 in [3] Ulas explizit rationale Funktionen $u(t)$, $x_1(t)$, $x_2(t)$, $x_3(t)$ angegeben, die von einer Variablen $t$ und den Kurvenparametern $a$ und $b$ abhängen, und die der oben genannten Skalba-Gleichung genügen.

Mit Hilfe der Skalba-Gleichung erhalten wir wie folgt eine effektiv berechenbare Abbildung von einem Parameter $t$ auf die Punkte der elliptischen Kurve E: $y^2 = g(x)$ (mod $p$). Gemäß der Skalba-Gleichung ist das Produkt $g(x_1(t)) \cdot g(x_2(t)) \cdot g(x_3(t))$ ein Quadrat. Dies ist nur möglich, wenn zumindest einer der drei Werte $g(x_i(t))$, $i = 1,2,3$ ein

$$y_i(t) = \sqrt{g(x_i)} \pmod{p}$$

Quadrat modulo p ist. Somit können wir zu mindestens einem $x_i(t)$ einen Wert berechnen und erhalten somit einen Punkt $(x_i(t), y_i(t))$ auf der elliptischen Kurve E.

Das Dokument EP 2443789 B1 beschreibt ein Verfahren zum Berechnen eines Punktes auf einer elliptischen Kurve, bei der eine vereinfachte Skalba-Gleichung der Form $u^2(t) = -g(x_2(t)) \cdot g(x_3(t))$ und außerdem $p = 3$ (mod 4) gilt. Da -1 im Fall $p = 3$ (mod 4) kein Quadrat modulo $p$ ist, muss genau einer der beider Werte $x_2(t)$ oder $x_3(t)$ ein Quadrat modulo $p$ sein, und wir erhalten wie oben beschrieben einen Punkt $(x_i(t), y_i(t))$, mit $i = 2$ oder 3, auf der elliptischen Kurve E : $y^2 = g(x)$ mod ($p$).

Der Erfindung liegt die Aufgabe zu Grunde, ein effizientes Verfahren zum Berechnen eines Punktes auf einer elliptischen Kurve zu schaffen, das vorzugsweise insbesondere zur Effizienzsteigerung beim Integrated Mapping für ECDH gemäß [1] TR-PACE-101 geeignet ist, insbesondere falls der Punkt in affinen Koordinaten vorliegen muss.

Die Aufgabe wird gelöst durch ein Verfahren nach Anspruch 1. Vorteilhafte Ausgestaltungen der Erfindung sind in den abhängigen Ansprüchen angegeben.

Das Verfahren nach Anspruch 1 ist eingerichtet, einen Punkt (x, y) auf einer elliptischen Kurve E zu berechnen. Der Punkt umfasst eine x-Koordinate x und eine y-Koordinate $y$ in affinen Koordinaten. Die elliptische Kurve ist gegeben durch E: $y^2 = g(x)$ mod p, mit $p = 3$ (mod 4) und g(x) ein Polynom in x vom Grad 3, das Koeffizienten umfasst. Der Punkt (x, y) ist von einem Parameter t abhängig, sowie von den Kurvenparametern der elliptischen Kurve E, welche durch die Koeffizienten des Polynoms dargestellt sind. (x, y) hat entweder den Wert $(x_2, y_2)$ oder den Wert $(y_3, y_3)$, wobei $x_2$, $x_3$ und eine weitere Funktion u jeweils rationale Funktionen abhängig von t und den Kurvenparametern sind, und wobei die folgende Beziehung gilt:

$$u^2(t) = -g(x_2(t)) \cdot g(x_3(t)) \pmod{p} \tag{1}$$

Das Verfahren zeichnet sich dadurch aus, dass

a) Polynome $X_2$, $X_3$, U, G und Z abhängig von der Variablen t und den Kurvenparametern bestimmt werden, so dass gilt

$$x_2(t) = X_2(t)/Z(t),\ x_3(t) = X_3(t)/Z(t),\ u(t) = U(t)/Z^3(t)$$

und

$$g(x_2(t)) = G(t)/Z^3(t), \tag{2}$$

b) mittels Durchführen einer einzigen modularen Exponentiation ein Wert A berechnet wird, der folgender Gleichung genügt:

$$A^2 \cdot G(t) \cdot Z(t) = \pm 1 \pmod{p},$$

ba) im Fall $A^2 \cdot G(t) \cdot Z(t) = 1 \pmod{p}$ der Punkt $(x, y) = (x_2, y_2)$ wie folgt berechnet wird: $x = X_2(t) \cdot A^2 \cdot G(t) \pmod{p}$, $y = \pm A^3 \cdot G^2(t) \pmod{p}$,
bb) im Fall $A^2 \cdot G(t) \cdot Z(t) = -1 \pmod{p}$ der Punkt $(x, y) = (x_3, y_3)$ berechnet wird gemäß: $x = -X_3(t) \cdot A^2 \cdot G(t) \pmod{p}$, $y = \pm A^3 \cdot G(t) \cdot U(t) \pmod{p}$

Die Korrektheit des Verfahrens ergibt sich aus folgender Überlegung: Wenn $x_2 = x_2(t)$ die x-Koordinate eines Punktes auf der Kurve E ist, gilt für die y-Koordinate $y_2(t)$ gemäß der Kurvengleichung:

$$y_2(t) = \pm\sqrt{g(x_2(t))} \pmod{p}. \tag{3}$$

Wenn $x_3 = x_3(t)$ die x-Koordinate eines Punktes auf der Kurve E ist, gilt für die y-Koordinate $y_3(t)$ gemäß der Kurvengleichung und Gleichung (1):

$$y_3(t) = \pm\sqrt{g(x_3(t))} = \pm\frac{u(t)}{\sqrt{-g(x_2(t))}} \pmod{p}. \tag{4}$$

Aufgrund der Bedingung $p = 3 \pmod 4$ existiert genau eine der beiden Wurzeln $\sqrt{g(x_2(t))} \pmod{p}$ und $\sqrt{-g(x_2(t))} \pmod{p}$, so dass genau eines der beiden Paare $(x_2(t), y_2(t))$ und $(x_3(t), y_3(t))$ einen Punkt auf der Kurve E darstellt. Im Folgenden sei $\text{sei} \sqrt{\pm\cdots} \pmod{p}$ immer diejenige Wurzel (modulo p), die existiert. Nach Definition von A und (2) gilt:

$$A = \pm\frac{1}{\sqrt{\pm G(t)Z(t)}} = \pm\frac{1}{\sqrt{\pm g(x_2(t)) \cdot Z^2(t)}} \pmod{p}. \tag{5}$$

Nach Definition von A gilt:

$$\frac{1}{Z(t)} = \pm A^2 G(t) \pmod{p} .\qquad(6)$$

Die Formeln für die x-Koordinaten $x_2$ und $x_3$ in ba) bzw. bb) ergeben sich durch Einsetzen von (6) in (2). Die Formeln für die y-Koordinaten $y_2$ und $y_3$ in ba) bzw. bb) ergeben sich durch Einsetzen von (2) und (5) in (3) bzw. (4).

Die inverse Quadratwurzel $A = 1/\sqrt{\pm G(t)Z(t)} \pmod{p}$ lässt sich wie oben gezeigt mit einer einzigen modularen Exponentiation berechnen. Abgesehen von dieser modularen Exponentiation benötigt das erfindungsgemäße Verfahren zur Berechnung des Punktes lediglich eine konstante Anzahl von modularen Additionen, Subtraktionen und Multiplikationen. Da modulare Exponentiationen besonders aufwendig sind, liefert das Einsparen einer von zwei modularen Exponentiationen einen erheblichen Vorteil.

Daher ist gemäß Anspruch 1 ein effizientes Verfahren zum Berechnen eines Punktes auf einer elliptischen Kurve geschaffen.

Wahlweise wird die modulare Exponentiation zur Berechnung von A mit der Basis $G(t) \cdot Z(t)$ und einem der Exponenten (3p-5)/4 oder (p-3)/4 durchgeführt. Mit anderen Worten wird eine der beiden folgenden alternativ möglichen Berechnungen durchgeführt:

$$A = \{G(t) \cdot Z(t)\}^{\frac{3p-5}{4}} \pmod{p} \quad \text{oder} \quad A = \{G(t) \cdot Z(t)\}^{\frac{p-3}{4}} \pmod{p}.$$

In beiden Fällen folgt daraus nach dem kleinen Fermatschen Satz $(A^2 \cdot G(t) \cdot Z(t))^2 = 1 \pmod{p}$, und damit die oben genannte Gleichung für $A$.

Wahlweise wird die modulare Exponentiation zur Berechnung von A mit der Basis $C(t) \cdot Z(t)$ und einem der Exponenten (3p-5)/4 oder (p-3)/4 oder (3p-5)/4 durchgeführt. (3p-5)/4 und (p-3)/4 sind zwei beispielhafte geeignete Exponenten. Wahlweise wird weiter zu jedem der beiden genannten beispielhaften Exponenten ein Vielfaches von p-1 addiert. Da sich hierdurch das Ergebnis nicht ändert, ist das Verfahren mit den so variierten Exponenten ebenfalls durchführbar. Maßgeblich ist, dass der Exponent so gewählt ist, dass der durch Exponentiation berechnete Wert A der in Anspruch 1 angeführten Gleichung genügt. Für die beispielhaften Exponenten (3p-5)/4, (p-3)/4, (3p-5)/4 plus ein Vielfaches von p-1, (p-3)/4 plus ein Vielfaches von $p$-1 ist dies der Fall.

Wahlweise wird das Vorzeichen von y gemäß ba) bzw. bb) nach einer bestimmten Konvention festgelegt. Die Konvention an sich wird hierbei als bekannt vorausgesetzt. Beispielsweise wird die implizit in TR-PACE-101 enthaltene Konvention verwendet, die das Vorzeichen von y in beiden Fällen festlegt. Bei einer festgelegten Kurve E trifft für jeden Parameter-Input t genau einer der beiden Fälle ba) oder bb) zu. In beiden Fällen liefert jedes der beiden Vorzeichen + oder - von y einen gültigen Punkt auf der Kurve. Indem das Vorzeichen gemäß der Konvention in beiden Fällen eindeutig festgelegt wird, wird das Integrated Mapping eindeutig bestimmt.

Wahlweise wird (so wie dies z.B. auch in TR-PACE-101 getan wird) erst der Exponent festgelegt, und dann das Vorzeichen von y so gewählt, wie es in Anbetracht des festgelegten Exponenten am einfachsten ist.

Wahlweise wird die elliptische Kurve E: $y^2 = g(x)$ in Weierstraß-Form vorgegeben, d.h. es gilt $g(x) = x^3 + ax + b$. Hierbei sind die Koeffizienten a und b gleich den Kurvenparametern a und b der elliptischen Kurve E.

Das Verfahren zum Berechnen eines Punktes auf einer elliptischen Kurve wird erfindungsgemäß in einem kryptographischen Verfahren eingesetzt, insbesondere in Elliptische-Kurven-Diffie-Hellman-Schlüsselableitungs-Verfahren, insbesondere beim PACE-Protokoll gemäß [1] TR-PACE-101, insbesondere beim Integrated Mapping für ECDH gemäß [1] TR-PACE-101.

Im Folgenden wird die Erfindung an Hand von Ausführungsbeispielen und unter Bezugnahme auf die Zeichnung näher erläutert, in der zeigt:

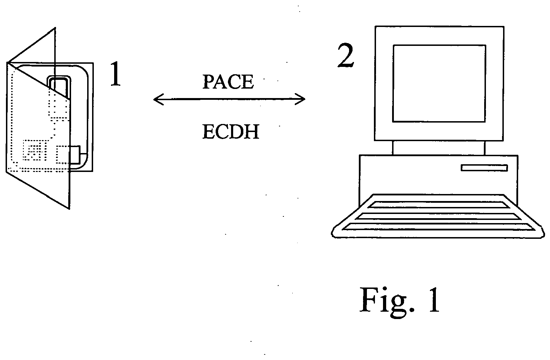

Fig. 1    ein System zur Veranschaulichung der Erfindung.

Fig. 1 zeigt ein maschinenlesbares Reisedokument 1, das unter [1] TR-PACE-101 fällt, und ein Prüfsystem 2, mit welchem das Reisedokument 1 überprüfbar ist, z.B. an einer Grenzkontrolle. Das Reisedokument 1 wird unter Anwendung des PACE-Protokolls überprüft. Das PACE-Protokoll ist im Beispiel aus Fig. 1 als Elliptische-Kurven-Diffie-Hellman (ECDH) Schlüsselableitungs-Protokoll gestaltet. Gemäß [1] TR-PACE-101, Kapitel 2.3.2 3b) führen MRTD (in Fig. 1 entsprechend Reisedokument 1) und Inspektionssystem (in Fig. 1 entsprechend Prüfsystem 2) gemäß Kapitel 4.3 den Schritt des Mappings durch, bei dem ephemerale Domainparameter abgeleitet werden. Vom Grundaufbau her wird gemäß Kapitel 4.3.1 von [1] ein zufällig gewählter Nonce t (entsprechend dem erfindungsgemäßen Parameter t) in eine elliptische Kurve E abgebildet, und hierdurch ein Punkt auf der elliptischen Kurve E berechnet. Dabei wird zum Berechnen des Punktes auf der elliptischen Kurve E das erfindungsgemäße Verfahren angewandt, das nur eine einzige modulare Exponentiation beinhaltet, und ansonsten mit modularen Additionen, Subtraktionen und Multiplikationen auskommt.

Zitierter Stand der Technik

[1] TR-PACE-101: "Technical Report: Supplement Access Control for Machine Readable Travel Documents", ISO/IEC JTC2 SC17 WG3/TF5, Version 1.01., November 2012;
[2] Skalba, M. Skalba: "Points on elliptic curves over finite fields"; Acta Arithmetica 117.3, 2005, pp 293-301;
[3] Ulas, Maciej Ulas: "Rational points on certain hyperelliptic curves over finite fields"; arXi-v:0706.1448 [math.NT], 11. Juni 2007;

**Patentansprüche**

1. Kryptographisches Verfahren umfassend Berechnen eines Punktes (x, y), umfassend eine x-Koordinate x und eine y-Koordinate $y$, in affinen Koordinaten, auf einer elliptischen Kurve
E: $y^2$ = g(x) mod p, mit p = 3 (mod 4) und g(x) ein Polynom in x vom Grad 3 umfassend Koeffizienten, wobei die Koeffizienten Kurvenparameter der elliptischen Kurve darstellen, wobei der Punkt (x, y) von einem Parameter t und den Kurvenparametern abhängig ist, und (x, y) entweder den Wert $(x_2, y_2)$ oder den Wert $(x_3, y_3)$ hat, und wobei $x_2$, $x_3$ und eine weitere Funktion u jeweils rationale Funktionen von t und den Kurvenparametern sind, und wobei die Beziehung

$$u^2(t) = -g(x_2(t)) \cdot g(x_3(t)) \ (\mathrm{mod}\ p)$$

gilt, **dadurch gekennzeichnet, dass**

a) Polynome $X_2$, $X_3$, U, G und Z abhängig von der Variablen t und den Kurvenparametern bestimmt werden, so dass gilt

$$x_2(t) = X_2(t)/Z(t),\ x_3(t) = X_3(t)/Z(t),\ u(t) = U(t)/Z^3(t)$$

und

$$g(x_2(t)) = G(t)/Z^3(t),$$

b) mittels Durchführen einer einzigen modularen Exponentiation ein Wert A berechnet wird, der folgender Gleichung genügt:

$$A^2 \cdot G(t) \cdot Z(t) = \pm\, 1 \ (\mathrm{mod}\ p),$$

ba) im Fall $A^2 \cdot G(t) \cdot Z(t)$ = 1 (mod p) der Punkt (x, y) = $(x_2, y_2)$ wie folgt berechnet wird: x = $X_2(t) \cdot A^2 \cdot G(t)$ (mod p), y = $\pm A^3 \cdot G^2(t)$ (mod p),
bb) im Fall $A^2 \cdot G(t) \cdot Z(t)$ = -1 (mod p) der Punkt (x, y) = $(x_3, y_3)$ wie folgt berechnet wird: x = - $X_3(t) \cdot A^2 \cdot G(t)$ (mod p), y = $\pm A^3 \cdot G(t) \cdot U(t)$ (mod p).

2. Verfahren nach Anspruch 1, wobei die modulare Exponentiation zur Berechnung von A mit der Basis $G(t) \cdot Z(t)$ und einem der Exponenten (3p-5)/4 oder (p-3)/4 oder (3p-5)/4 zuzüglich einem Vielfachen von p-1 oder (p-3)/4 zuzüglich einem Vielfachen von p-1 durchgeführt wird.

3. Verfahren nach Anspruch 1 oder 2, wobei das Vorzeichen von y gemäß ba) bzw. bb) nach einer bestimmten Konvention festgelegt wird.

4. Verfahren nach einem der Ansprüche 1 bis 3, wobei die elliptische Kurve E: $y^2$ = g(x) in Weierstraß-Form vorliegt, wobei gilt $g(x) = x^3 + ax + b$, mit Kurvenparametern a und b.

5. Kryptographisches Verfahren nach einem der Ansprüche 1 bis 4, gestaltet als Elliptische-Kurven-Diffie-Hellman-Schlüsselableitungs-Verfahren.

**Claims**

1. Cryptographic method comprising calculating a point (x, y) comprising an x-coordinate $x$ and a y-coordinate $y$, in affine coordinates, on an elliptical curve $E$: $y^2$ = g(x) mod p, with p = 3 (mod 4) and g(x) a polynomial in x of degree 3 comprising coefficients, wherein the coefficients represent curve parameters of the elliptical curve, wherein the point (x, y) being dependent on a parameter t and the curve parameters, and (x, y) has either the value $(x_2, y_2)$ or the value $(x_3, y_3)$, and wherein $x_2$, $x_3$ and a further function $u$ are each rational functions of $t$ and the curve parameters, and wherein the relation

$$u^2(t) = -g\big(x_2(t)\big) \cdot g\big(x_3(t)\big) \ (mod\ p)$$

is valid, **characterized in that**

a) polynomials $X_2$, $X_3$, U, G and Z are determined depending on the variable t and the curve parameters, so that

$$x_2(t) = X_2(t)/Z(t), x_3(t) = X_3(t)/Z(t), u(t) = U(t)/Z^3(t)$$

and

$$g(x_2(t)) = G(t)/Z^3(t)$$

is valid, b) by carrying out a single modular exponentiation, a value A being calculated, which satisfies the following equation:

$$A^2 \cdot G(t) \cdot Z(t) = \pm 1 \ (mod\ p),$$

ba) in case $A^2 \cdot G(t) \cdot Z(t) = 1 (mod\ p)$, the point (x, y)= $(x_2, y_2)$ being calculated as follows:

$$x = X_2(t) \cdot A^2 \cdot G(t) \ (mod\ p), y = \pm A^3 \cdot G^2(t) \ (mod\ p),$$

bb) in case $A^2 \cdot G(t) \cdot Z(t)$ = -1 (mod p), the point (x, y) = $(x_3, y_3)$ being calculated as follows: x = -$X_3(t) \cdot A^2$ · G(t) (mod p),y = $\pm A^3 \cdot G(t) \cdot U(t)$ (mod p).

2. Cryptographic method according to claim 1, wherein the modular exponentiation for calculation of A is carried out with the base $G(t) \cdot Z(t)$ and one of the exponents (3p-5)/4 or (p-3)/4 or (3p-5)/4 plus a multiple of p-1 or (p-3)/4 plus a multiple of p-1.

3. Cryptographic method according to claim 1 or 2, wherein the sign of y according to ba) or bb) is determined according to a specific convention.

4. Cryptographic method according to one of claims 1 to 3, wherein the elliptical curve $E$: $y^2$ = g(x) exists in Weierstrass-form, wherein
$g(x) = x^3 + ax + b,$ with curve parameters a and b is valid.

5. Cryptographic method according to one of claims 1 to 4, designed as an elliptical-curve-Diffie-Hellman-Key-Deviation-method.


**Revendications**

1. Procédé cryptographique comportant le calcul d'un point (x, y), *x* étant une abscisse et *y* une ordonnée, en coordonnées affines, sur une courbe elliptique
E: $y^2$ = g(x) mod p, avec p = 3 (mod 4) et g(x) un polynôme de x de degré 3 incluant des coefficients, dans lequel les coefficients représentent des paramètres de courbe de la courbe elliptique, dans lequel le point (x, y) dépend d'un paramètre t et des paramètres de courbe, et (x, y) prend soit la valeur $(x_2, y_2)$ soit la valeur $(x_3, y_3)$, et dans lequel $x_2$, $x_3$ et une fonction supplémentaire *u* sont respectivement des fonctions rationnelles de t et les paramètres de courbe, et dans lequel la relation

$$u^2(t) = -g(x_2(t)) \cdot g(x_3(t)) \ (\mathrm{mod}\ p)$$

est satisfaite, **caractérisé en ce que**

a) les polynômes $X_2$, $X_3$, U, G et Z sont déterminés en fonction des variables t et des paramètres de courbe, de sorte que

$$x_2(t) = X_2(t)/Z(t),\ x_3(t) = X_3(t)/Z(t),\ u(t) = U(t)/Z^3(t)$$

et

$$g(x_2(t)) = G(t)/Z^3(t)$$

s'appliquent,
b) une valeur A est calculée en effectuant une exponentiation modulaire unique qui satisfait l'équation suivante :

$$A^2 \cdot G(t) \cdot Z(t) = \pm\ 1 \ (\mathrm{mod}\ p),$$

ba) lorsque $A^2 \cdot G(t) \cdot Z(t) = 1$ (mod p), le point (x, y) = $(x_2, y_2)$ est calculé comme suit : x = $X_2(t) \cdot A^2 \cdot G(t)$ (mod p), y = $\pm\ A^3 \cdot G^2(t)$ (mod p),
bb) lorsque $A^2 \cdot G(t) \cdot Z(t) = -1$ (mod p), le point (x, y) = $(x_3, y_3)$ est calculé comme suit : x = $-\ X_3(t) \cdot A^2 \cdot G(t)$ (mod p), y = $\pm\ A^3 \cdot G(t) \cdot U(t)$ (mod p).

2. Procédé selon la revendication 1, dans lequel l'exponentiation modulaire est réalisée pour le calcul de A avec la base $G(t) \cdot Z(t)$ et l'un des exposants (3p-5)/4 ou (p-3)/4 ou (3p-5)/4 plus un multiple de p-1 ou (p-3)/4 plus un multiple de p-1.

3. Procédé selon la revendication 1 ou 2, dans lequel le signe algébrique de y est déterminé d'après ba) ou bb) selon une convention définie.

4. Procédé selon l'une des revendications 1 à 3, dans lequel la courbe elliptique E: $y^2$ = g(x) se présente sous la forme de Weierstrass, dans laquelle $g(x) = x^3 + ax + b,$ avec les paramètres de courbe a et b.

5. Procédé cryptographique selon l'une des revendications 1 à 4, conçu comme un procédé de dérivation de clé de Diffie-Hellman à courbe elliptique.

**Fig. 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2443789 B1

**In der Beschreibung aufgeführte Nicht-Patentliteratur**

- Technical Report: Supplement Access Control for Machine Readable Travel Documents. *ISO/IEC JTC2 SC17 WG3/TF5,* November 2012
- **SKALBA, M. SKALBA.** Points on elliptic curves over finite fields. *Acta Arithmetica 117.3,* 2005, 293-301
- **ULAS, MACIEJ ULAS.** *Rational points on certain hyperelliptic curves over finite fields,* 11. Juni 2007